# EUROPÄISCHE PATENTANMELDUNG

(11) **EP 1 782 748 A1**
(43) Veröffentlichungstag der Anmeldung: **09.05.2007**
(21) Anmeldenummer: 06023208.9
(22) Anmeldetag: 08.11.2006
(51) Int. Cl.: A61C 7/00

(54) **Behandlungsgerät**

(30) Priorität: 08.11.2005 DE 102005053536; 13.12.2005 DE 102005059922
(71) Anmelder: Dr. Hinz Labor, Fachlaboratorium für Kieferorthopädie GmbH & Co. KG, D-44623 Herne (DE)
(72) Erfinder: Paeske, Ingo, 44623 Herne (DE)
(74) Vertreter: Gesthuysen, von Rohr & Eggert

(57) **Zusammenfassung**

Dargestellt und beschrieben ist ein Behandlungsgerät ausgebildet zur Übertragung einer Kraft auf wenigstens zwei Zähne (2, 3, 6) eines Patienten, wobei das Behandlungsgerät mit wenigstens zwei Zähnen (2, 3, 6) des Patienten befestigbar ist. Erfindungsgemäß ist vorgesehen, daß das Behandlungsgerät aus einem wenigstens ein Zirkonoxid und ggf. wenigstens einen Zusatzstoff aufweisenden Werkstoff gefertigt ist.

## Beschreibung

Die Erfindung betrifft ein Behandlungsgerät nach dem Oberbegriff von Anspruch 1.

Zeitlebens besteht die Tendenz der Zähne, nach vorne zu wandern. Dies wird zum einen durch den Durchbruchsdruck der Weisheitszähne sowie einem möglichen Restwachstumsschub des Unterkiefers, insbesondere im Alter zwischen dem 18. und dem 25. Lebensjahr, begünstigt. Dies kann zu einer deutlichen Veränderung der Stellung der Frontzähne, insbesondere der Schneidezahnstellung, führen. Darüber hinaus kann es im Anschluß an eine kieferorthopädische Behandlung zu einem Rückfall oder der Entstehung eines Frontengstandes kommen. Um die Zahnstellung in einer (zuvor regulierten) Stellung zu fixieren, werden als zahnärztliche bzw. zahntechnische Behandlungsgeräte unter anderem Retentionsgeräte bzw. Retainer eingesetzt, die über einen Zeitraum von ca. 4 bis 5 Jahren, in bestimmten Fällen auch noch länger, im Mund verbleiben können. Durch die Fixierung der Zahnstellung kann eine Verschiebung der Frontzähne verhindert und eine funktionelle und ästhetische Beeinträchtigung eines kieferorthopädischen Behandlungsergebnisses verhindert werden. Die aus dem Stand der Technik bekannten Retentionsgeräte bestehen aus einem runden, mehrfach verseilten Stahldraht, der punktförmig an den Zähnen befestigt wird. In den meisten Fällen wird in Betracht gezogen, das Retentionsgerät bis ins Erwachsenenalter, mindestens bis zum 25. Lebensjahr, zu tragen.

Die bekannten Retentionsgeräte weisen den Nachteil auf, daß es aufgrund des metallischen Werkstoffs, aus dem die Retentionsgeräte gefertigt sind, zu allergischen Reaktionen des Patienten kommen kann. Darüber hinaus kommt es bei den bekannten Retentionsgeräten zu einer verstärkten Anlagerung von Zahnbelägen, was die Zahnsteinbildung und die Entstehung von Zahnkaries fördern kann.

Ähnliche Probleme treten im Zusammenhang mit festsitzenden Lückenhaltern bzw. Platzhaltern auf, die zum Freihalten von Zahnzwischenräumen, d.h. von Zahnlücken, zwischen zwei Zähnen eingesetzt werden. Lückenhalter sind vorgesehen, um bei vorzeitigem Ausfall eines oder mehrerer Milchzähne einen Zahnzwischenraum für die sich später bildenden bleibenden Zähne oder um bei nicht-angelegten bleibenden Zähnen einen Zahnzwischenraum für einen späteren Einsatz eines Zahnersatzes offenzuhalten. Bisher werden Lükkenhalter aus Metall-Legierungen hergestellt. Auch hier kann es zu allergischen Reaktionen und einer verstärkten Zahnbelagbildung kommen. Über die vorgenannten Nachteile hinaus sind Retentionsgeräte und Lückenhalter aus Metall-Legierungen ästhetisch wenig ansprechend.

Aufgabe der vorliegenden Erfindung ist es, ein Behandlungsgerät der eingangs genannten Art zur Verfügung zu stellen, bei dem die vorgenannten Nachteile nicht auftreten.

Die vorgenannte Aufgabe wird durch einen Retainer oder Abstandshalter mit den Merkmalen von Anspruch 1 gelöst. Der Erfindung liegt der Grundgedanke zugrunde, zur Herstellung von zahnärztlichen und/oder zahntechnischen passiven Behandlungsgeräten, die zur Übertragung einer Haltekraft auf wenigstens zwei Zähne eines Patienten ausgebildet sind, wie vorzugsweise bislang ausschließlich aus metallischen Werkstoffen hergestellte Retainer oder Lückenhalter, erstmals Zirkonoxide einzusetzen. Passive Behandlungsgeräte werden in der Regel eingesetzt, um den erreichten Erfolg einer kieferorthopädischen Behandlung zu sichern. In Zusammenhang mit der Erfindung konnte die überraschende Erkenntnis gewonnen werden, daß Behandlungsgeräte der in Rede stehenden Art aus Zirkonoxiden eine ausreichend hohe Festigkeit und Elastizität aufweisen, so daß es durch die beim Tragen auftretenden Spannungen nicht zu einem Bruch des Behandlungsgerätes kommen kann. Vor dem Anmeldetag der Erfindung bestand dagegen die Auffassung in der Fachwelt, daß Behandlungsgeräte der in Rede stehenden Art aufgrund der hohen mechanischen Belastungen lediglich aus metallischen Werkstoffen gefertigt werden könnten.

Zirkonoxide zeichnen sich durch eine geringe Neigung zur Zahnbelagbildung, eine ansprechende Ästhetik und ausgezeichnete Biokompatibilität aus. Die Bildung von allergischen Reaktionen kann bei der Verwendung von nichtmetallischen Behandlungsgeräten aus Zirkonoxiden weitgehend ausgeschlossen werden. Sollen die erfindungsgemäßen Behandlungsgeräte mit den Zahnflächen verklebt werden, ist es nicht notwendig, die Oberflächen der Behandlungsgeräte vorzubehandeln, um eine ausreichende Haftung an den Zähnen sicherzustellen. Dadurch wird der Befestigungsvorgang vereinfacht und damit die Kosten im Zusammenhang mit der Verwendung der erfindungsgemäßen Behandlungsgeräte deutlich verringert.

In diesem Zusammenhang wird darauf hingewiesen, daß neben Retainern und Platzhaltern auch aktive Behandlungsgeräte, die als Attachments zur direkten Kraftübertragung auf die Zähne eines Patienten eingesetzt werden, aus Zirkonoxid(en) herstellbar sind. Vorzugsweise können die Attachments fest mit den Zähnen verbunden, beispielsweise verklebt, sein. Handelt es sich um auf die Zähne aufzuklebende Attachments, können diese haken- oder knopfartig ausgebildet sein und zusammen mit individuell gefertigten Silikonstreifen zur direkten Krafteinwirkung verwendet werden und mit diesen zusammenwirken, insbesondere nach der sogenannten KFO-Elasto-Methode der Anmelderin. Die Silikonstreifen werden entsprechend einem vorgegebenen Behandlungsziel gefertigt. Zudem sind auch orthodontische Metallbänder aus Zirkonoxiden herstellbar, was zu ähnlichen Vorteilen führt.

Das erfindungsgemäße Behandlungsgerät kann aus einem Werkstoff gefertigt sein, der zusätzlich zu einem Zirkonoxid wenigstens einen weiteren Zusatzstoff aufweisen kann. Bevorzugt ist es jedoch, daß das erfindungsgemäße Behandlungsgerät vollständig aus Zirkonoxid gefertigt ist, beispielsweise aus einem stabilisierten Zirkondioxid, insbesondere aus yttrium-stabilisiertem Zirkondioxid. In diesem Zusammenhang wird darauf hingewiesen, daß es sich bei einem Zirkonoxid auch um ein modifiziertes Zirkondioxid handeln kann.

Zirkonoxide verfügen über eine deutlich höhere Biegefestigkeit als Aluminiumoxide, sind im Gegensatz zu Metallen korrosionsbeständig und der Farbe des natürlichen Zahns sehr ähnlich. Weitere Vorteile, die für den Einsatz von Zirkonoxiden als Werkstoffe zur Herstellung von Behandlungsgeräten der erfindungsgemäßen Art sprechen, sind ein geringes Gewicht und eine niedrige Temperaturleitfähigkeit von Zirkonoxiden, wobei die niedrige Temperaturleitfähigkeit dazu beiträgt, daß es nicht zu thermischen Irritationen beispielsweise durch den Retainer oder den Platzhalter kommen kann. Im übrigen weist das erfindungsgemäße Behandlungsgerät eine hohe Härte, chemische Stabilität und Druckfestigkeit auf, was auf die Fertigung aus einer oxidischen Dentalkeramik zurückzuführen ist.

Bei einer bevorzugten Ausführungsform der Erfindung ist es vorgesehen, daß der zur Herstellung des erfindungsgemäßen Behandlungsgerätes eingesetzte Werkstoff Zirkondioxid aufweist, insbesondere Yttrium-stabilisiertes Zirkondioxid. Dichtgesintertes Yttrium-stabilisiertes Zirkondioxid weist mechanische Eigenschaften auf, die mit den mechanischen Eigenschaften von Metallkeramiken vergleichbar sind. Zirkondioxid wird aus Rohstoffen Baddeleyit auf der Basis von ZrO₂ oder aus reinem Zirkon auf der Basis von ZrSiO₄ gewonnen. Von wesentlicher Bedeutung für die ausgezeichneten mechanischen Eigenschaften von Zirkondioxidwerkstoffen ist deren Auftreten in drei unterschiedlichen Kristallmodifikationen, nämlich monoklin, tetragonal und kubisch. Die stabile Form von reinem Zirkonoxid ist bei Raumtemperatur monoklin. Die Umwandlung der monoklinen in die tetragonale Phase erfolgt bei 980°C. Bis 1170°C liegen dann beide Phasen nebeneinander vor, oberhalb von 1170°C jedoch nur noch die tetragonale Phase. Bei 2370°C geht die tetragonale in die kubische Modifikation über. Bei der Tetragonal/Monoklinen-Umwandlung bei 980°C handelt es sich um eine martensitische Transformation ähnlich der des Stahls. Diese Phasenumwandlung ist mit einer Volumenvergrößerung verbunden und führt zu makroskopisch sichtbaren Rissen und damit zur Zerstörung des Materials. Durch geeignete Stabilisatoren ist es jedoch möglich, die Phasenumwandlungen zu unterdrücken, so daß auch bei Raumtemperatur die beiden Hochtemperaturphasen vorliegen können. In diesem Zusammenhang sieht die Erfindung vor, daß als mögliche Zusatzstoffe Stabilisatoren, insbesondere CaO, MgO, Y₂O₃ und CeO₂, eingesetzt werden können. Grundsätzlich ist es darüber hinaus möglich, Mischungen aus einem Zirkonoxid und einer weiteren oxidischen Dentalkeramik, beispielsweise einem Aluminiumoxid und/oder einem Titanoxid, als Werkstoff zur Fertigung des erfindungsgemäßen Behandlungsgerätes vorzusehen.

Bei einer bevorzugten Ausführungsform ist das Behandlungsgerät einstückig ausgebildet. Der Retainer oder der Platzhalter können beispielsweise vollständig aus Zirkondioxid gefertigt sein. Grundsätzlich ist es natürlich auch möglich, daß das Behandlungsgerät mehrteilig ausgebildet ist, wobei beispielsweise wenigstens ein Teil eines Retainers oder eines Platzhalters nicht aus einem wenigstens ein Zirkonoxid aufweisenden Werkstoff gefertigt sein kann, sondern aus einem Edelmetall oder Edelstahl.

Die Herstellung des erfindungsgemäßen Behandlungsgerätes kann auf zwei unterschiedlichen Wegen erfolgen. Zum einen ist es möglich, daß das Behandlungsgerät, beispielsweise ein Retainer oder ein Platzhalter, aus einem durchgesinterten Rohling aus einem ein Zirkonoxid aufweisenden Werkstoff durch abtragende Bearbeitung herausgearbeitet wird. Beispielsweise ist es möglich, den Retainer oder den Platzhalter aus einem Rohling bzw. einem Block aus vor- und/oder durchgesintertem Zirkondioxid herauszufräsen oder herauszuschleifen.

Aufgrund der hohen Festigkeit durchgesinterter oxidischer Dentalkeramiken wird jedoch vorzugsweise vorgesehen, daß Behandlungsgerät, beispielsweise die Retainer- oder Platzhalterform, aus einem sogenannten Grünkörper herauszufräsen oder -zuschleifen. Der Grünkörper kann beispielsweise aus wenigstens einem (homogenem) vorgesinterten Zirkonoxid bestehen, wobei der Grünkörper eine wesentlich geringere Festigkeit aufweist als der durchgesinterte Werkstoff. Erst im Anschluß an den Fräsvorgang ist ein Sinterprozeß zur vollständigen Durchsinterung des Retainers oder Platzhalters vorgesehen. Dadurch kann die Bearbeitungszeit und der Verschleiß der zur Herstellung des Behandlungsgerätes eingesetzten Werkzeuge reduziert werden. Im übrigen ist es möglich, einen nicht vollständig durchgesinterten Retainer oder Platzhalter in einfacher Weise nachzubearbeiten. Dadurch können Schäden an der oxidischen Dentalkeramik vermieden werden, die beim Bearbeiten von vollständig durchgesintertem Material auftreten und zur Rißbildung führen können.

Die Herstellung des Behandlungsgerätes kann computergestützt unter Einsatz digitaler Datenaufbereitungs- und -erfassungssysteme erfolgen. Im Idealfall kann der vollständige Herstellungsprozeß von der Datenerfassung betreffend die Zahnstellung bis zum Fräsen oder Schleifen des Behandlungsgerätes, beispielsweise eines Retainers oder Platzhalters, automatisch ablaufen. In diesem Zusammenhang können an sich aus dem Stand der Technik bereits bekannte CAD/CAM-Systeme eingesetzt werden.

Das erfindungsgemäße Behandlungsgerät kann in einem Therapiezustand, d.h. im mit den Zahnflächen der Zähne des Patienten verbundenen Zustand, mit einem Glasionomer-Zement und/oder einem Zinkphosphat-Zement und/oder einem Carboxylat-Zement mit den Zahnflächen verklebt sein. In diesem Zusammenhang ist eine Vorbehandlung der Oberflächen des Behandlungsgerätes nicht notwendig, um eine sehr gute Haftung des Klebstoffes und eine stabile Verbindung mit den Zahnflächen sicherzustellen. Glasionomer-Zemente weisen neben der einfachen Verarbeitungsmöglichkeit und der geringen Kosten eine hohe Gewebeverträglichkeit und ein sehr gutes Haftvermögen an Zahnschmelz und Dentin auf. Darüber hinaus kommt es durch Fluoridabgabe zur Minderung des Risikos der Kariesbildung. Grundsätzlich können natürlich auch Kunststoffkleber und unter Licht härtende oder selbst-härtende Komposite zum Verkleben eingesetzt werden.

Im einzelnen gibt es eine Vielzahl von Möglichkeiten, das erfindungsgemäße Behandlungsgerät auszugestalten und weiterzubilden, wobei einerseits auf die abhängigen Patentansprüche und andererseits auf die nachfolgende Beschreibung bevorzugter Ausführungsbeispiele der Erfindung unter Bezugnahme auf die Zeichnung verwiesen wird. Es zeigen:
- Fig. 1 bis 8: Ausführungsformen erfindungsgemäßer Retentionsgeräte und
- Fig. 9: eine Ausführungsform eines erfindungsgemäßen Lückenhalters.

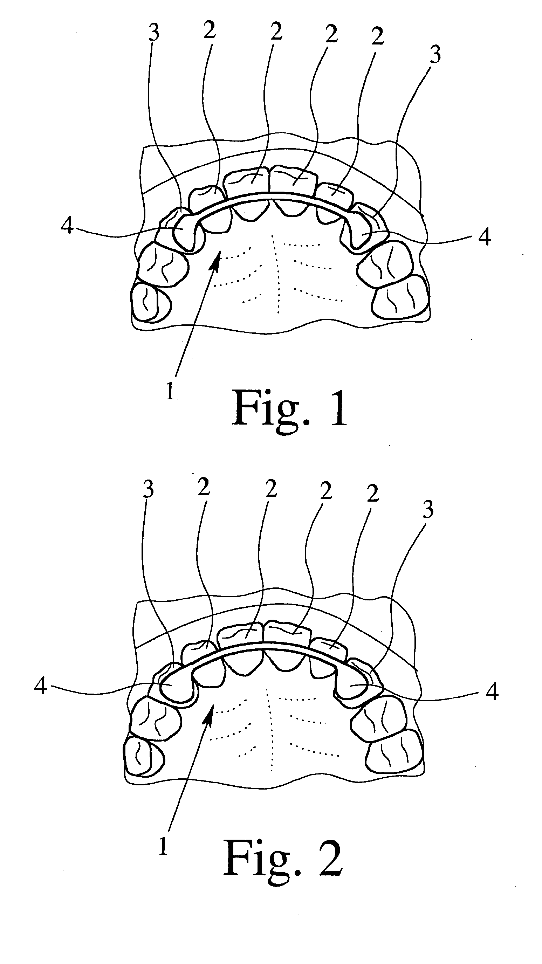

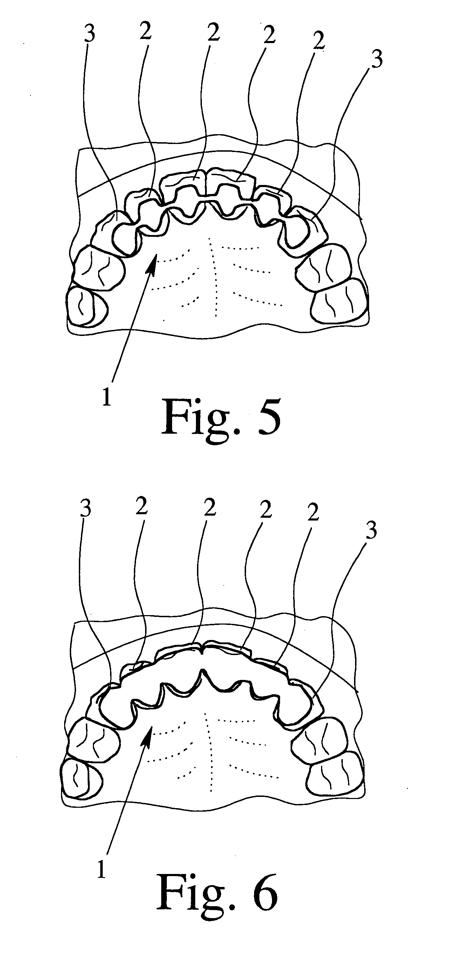

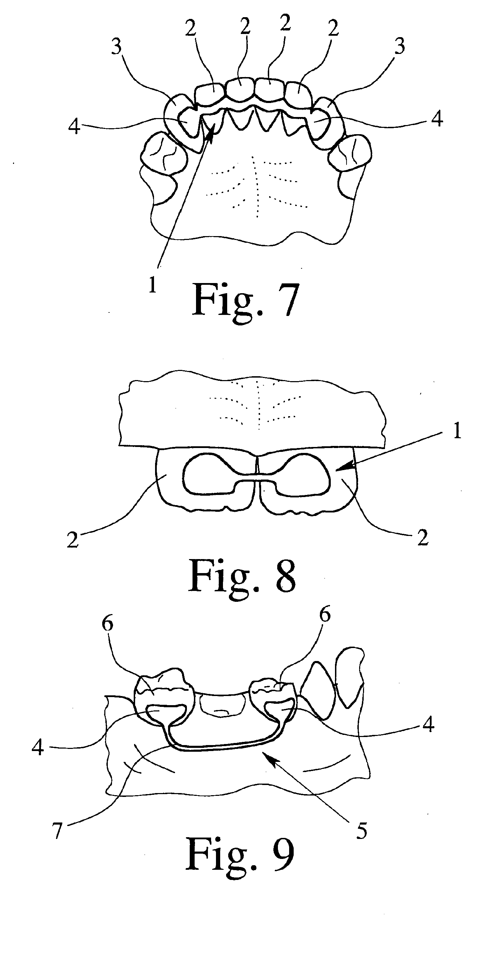

In den Fig. 1 bis 8 sind erfindungsgemäße Retentionsgeräte 1 jeweils im Therapiezustand dargestellt, wobei das Retentionsgerät 1 jeweils an den innen liegenden Zahnflächen der Schneidezähne 2 und der Eckzähne 3 gemäß den in den Fig. 1 bis 7 dargestellten Ausführungsformen und an den innen liegenden Zahnflächen der Schneidezähne 2 gemäß der in Fig. 8 dargestellten Ausführungsform anliegt. Rententionsgeräte 1 sind starre Apparaturen, die regulierte Zähne davor bewahren, sich in ihre ursprüngliche Fehlstellung zurückzubewegen. Dazu neigen besonders die unteren Schneidezähne 2, die durch einen "Retainer" lange Zeit in der neu gewonnenen Position gehalten werden müssen. Die Auswahl eines Retentionsgerätes 1 richtet sich nach Art und Umfang der durchgeführten Zahnbewegungen. Dabei müssen Habits und andere Dysfunktionen, die ein Rezidiv begünstigen könnten, sowie die Lage der Weisheitszähne ebenfalls berücksichtigt werden.

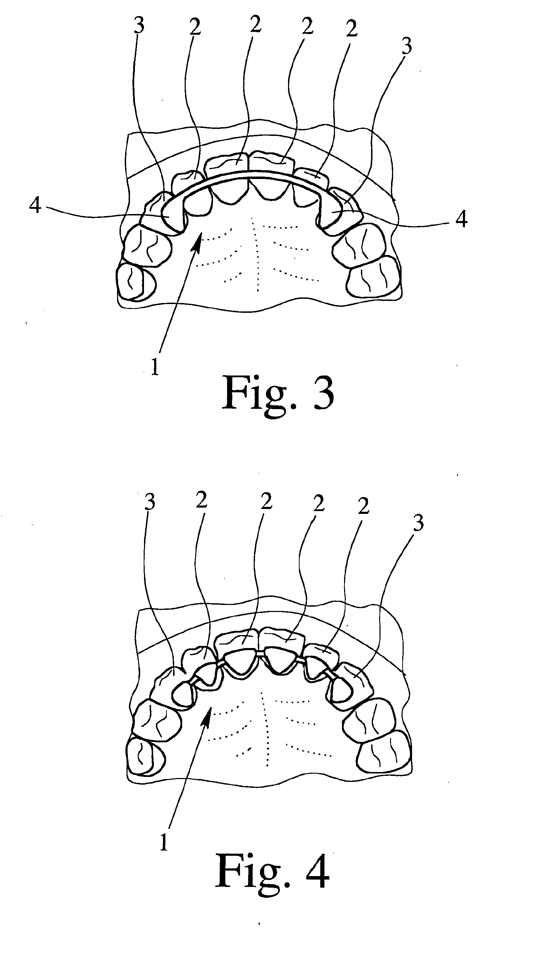

Erfindungsgemäß ist vorgesehen, daß das Retentionsgerät 1 aus Zirkondioxid gefertigt und gemäß den in den Fig. 1 bis 3 und 7 dargestellten Ausführungsformen mit den Eckzähnen 3 des Patienten verklebt ist, wobei das Retentionsgerät 1 an den Enden entsprechend verstärkt ist, um eine ausreichend große Verklebungsfläche 4 zur Verfügung zu stellen. Gemäß den Fig. 4 bis 6 kann das Retentionsgerät 1 auch mit den Frontzähnen 2 und mit den Eckzähnen 3 verklebt sein. In Fig. 8 ist ein Retentionsgerät 1 nach Schließen eines großen Diastemas im Oberkiefer des Patienten dargestellt, wobei das Retentionsgerät 1 mit den Schneidezähnen 2 des Patienten verklebt ist. Bei dem zum Verkleben eingesetzten Klebstoff handelt es sich jeweils um Glasionomer-Zement.

In Fig. 9 ist ein Lückenhalter 5 dargestellt, der zum Freihalten eines Zahnzwischenraums zwischen zwei Zähnen 6 eines Patienten bei vorzeitigem Milchmolaren Verlust oder als Platzhalter bei Nichtanlagen von Prämolaren vorgesehen sein kann.

Die Klebeflächen 4 liegen an den bukkalen Flächen der Zähne 6, ohne die Okklusion zu stören, während ein abstandhaltender starrer Bogen 7 vestibulär verläuft.

## Patentansprüche

1. Behandlungsgerät, nämlich Retainer oder Abstandshalter, ausgebildet zur Übertragung einer Kraft auf wenigstens zwei Zähne (2, 3, 6) eines Patienten, wobei das Behandlungsgerät mit wenigstens zwei Zähnen (2, 3, 6) des Patienten befestigbar ist, **dadurch gekennzeichnet, daß** das Behandlungsgerät vollständig aus einem Zirkonoxid gefertigt ist, wobei das Behandlungsgerät aus einem vorgesinterten Grünkörper aus einem Zirkonoxid herausgefräst oder - geschliffen wird und wobei daran anschließend eine Durchsinterung des Behandlungsgerätes vorgesehen ist.

2. Behandlungsgerät nach Anspruch 1, **dadurch gekennzeichnet, daß** das Behandlungsgerät einstückig ausgebildet ist.
